# FASCICULE DE BREVET EUROPEEN

(11) **EP 2 433 533 B1**
(45) Date de publication et mention de la délivrance du brevet: **20.08.2014**
(21) Numéro de dépôt: 11306211.1
(22) Date de dépôt: 23.09.2011
(51) Int. Cl.: A47J 43/07

(54) **Appareil électroménager de préparation culinaire comportant un récipient renfermant un outil coupant entraîné en rotation par un moteur**
Haushaltsgerät mit einem Gefäß, das ein von einem Motor angetriebenes Schneidewerkzeug umfasst
Household cooking appliance comprising a receptacle containing a motor driven cutting tool

(30) Priorité: 24.09.2010 FR 1057720
(43) Date de publication de la demande: 28.03.2012
(73) Titulaire: SEB S.A., 69130 Écully (FR)
(72) Inventeur: Feron, Stéphanie, 53440 Marcillé-la-Ville (FR); Lemarie, Christophe, 53470 Martigné-sur-Mayenne (FR)
(74) Mandataire: Bourrières, Patrice

(56) Documents cités:
- EP-A2- 1 566 129

## Description

La présente invention concerne le domaine technique général des appareils électroménagers de préparation culinaire tels que les robots ménagers multifonctions comportant un récipient renfermant un outil coupant entraîné en rotation par un moteur.

La présente invention se rapporte plus particulièrement à un appareil dans lequel le récipient est fermé par un couvercle amovible muni d'une patte venant agir sur une pièce de sécurité lorsque la patte du couvercle est tournée vers une position de fonctionnement correspondant à une orientation particulière du couvercle en position fermée, la pièce de sécurité étant mobile entre une position de repos, vers laquelle elle est amenée par des moyens de rappel, et une position activée, vers laquelle elle est amenée lorsque la patte est en position de fonctionnement.

On connaît de la demande de brevet EP 1 566 129, déposée par la demanderesse, un robot ménager comportant un récipient coiffé par un couvercle amovible et un moteur entraînant un outil coupant rotatif monté dans le fond du récipient. Le robot comporte un caisson adjacent au récipient dans lequel est disposée une pièce de sécurité mobile en rotation qui coopère avec une patte du couvercle pour immobiliser le couvercle et n'autoriser l'actionnement d'un bouton de commande du moteur que lorsque le couvercle est en position de fonctionnement. Le robot comporte également un bouton de déverrouillage qui agit sur la pièce de sécurité pour libérer le couvercle.

Un tel dispositif de verrouillage/déverrouillage du couvercle présente cependant l'inconvénient d'être relativement complexe à mettre en oeuvre. De plus, cet appareil présente l'inconvénient de ne pas comporter de dispositif de freinage de l'outil coupant.

L'invention qui suit vise à pallier ces inconvénients en proposant un appareil électroménager de préparation culinaire comportant une pièce de sécurité actionnée à la fermeture du couvercle assurant plusieurs fonctions de sécurité et notamment la fonction freinage de l'outil. Un autre but de la présente invention est de proposer une pièce de sécurité assurant le verrouillage du couvercle en position fermée de fonctionnement.

Le but de l'invention est atteint par un appareil électroménager de préparation culinaire comportant un récipient renfermant un outil coupant entraîné en rotation par un moteur, le récipient étant fermé par un couvercle amovible comportant une patte venant agir sur une pièce de sécurité lorsque la patte du couvercle est tournée vers une position de fonctionnement, la pièce de sécurité étant mobile entre une position de repos, vers laquelle elle est ramenée par des moyens de rappel, et une position activée, vers laquelle elle est amenée lorsque la patte est en position de fonctionnement, caractérisé en ce que la pièce de sécurité comporte un patin de freinage venant frotter contre un élément de transmission solidaire en rotation de l'outil coupant lorsque la pièce de sécurité est en position de repos, le patin de freinage étant éloigné de l'élément de transmission lorsque la pièce de sécurité est en position activée.

Par position de fonctionnement, on entend une position de la patte correspondant à une orientation particulière du couvercle en position fermée dans laquelle l'appareil est autorisé à fonctionner.

Un tel appareil présente l'avantage d'assurer avec une même pièce de sécurité à la fois la détection de la présence du couvercle en position fermée de fonctionnement et le freinage de l'outil coupant.

Selon une autre caractéristique de l'invention, le patin de freinage est réalisé en matériau métallique.

Une telle caractéristique présente l'avantage de garantir une grande durée de vie au patin de freinage.

Selon une autre caractéristique de l'invention, l'élément de transmission est une courroie.

Une telle caractéristique présente l'avantage de permettre un freinage de l'outil coupant relativement silencieux grâce à la souplesse de la courroie qui absorbe les chocs lorsque le patin de freinage entre en action.

Selon une autre caractéristique de l'invention, la patte du couvercle est amenée dans la position de fonctionnement par rotation de la patte coaxialement au récipient.

Selon encore une autre caractéristique de l'invention, la patte en position de fonctionnement se trouve insérée dans une fente ménagée dans un caisson adjacent au récipient et coopère avec une tête de commande de la pièce de sécurité.

Selon encore une autre caractéristique de l'invention, la tête de commande comporte un verrou assurant l'immobilisation de la patte en position de fonctionnement lorsque la pièce de sécurité est en position activée.

Une telle caractéristique présente l'avantage d'assurer le verrouillage du couvercle en position fermée lors du fonctionnement de l'appareil.

Selon une autre caractéristique de l'invention, l'appareil comporte un bouton de déverrouillage ramené par un ressort de rappel dans une position de repos dans laquelle le bouton de déverrouillage immobilise la pièce de sécurité dans la position activée, le bouton de déverrouillage pouvant être déplacé manuellement vers une position de déverrouillage dans laquelle la pièce de sécurité peut se déplacer librement vers sa position de repos.

Selon encore une autre caractéristique de l'invention, les moyens de rappel sont dimensionnés de telle sorte que la patte du couvercle retourne automatiquement vers une position d'ouverture du couvercle, dans laquelle la patte se trouve en dehors de la fente du caisson, lorsque le bouton de déverrouillage est actionné.

Une telle caractéristique présente l'avantage d'assurer une éjection automatique de la patte du couvercle en dehors de la fente lorsque le bouton de déverrouillage est actionné de sorte que l'utilisateur n'a plus qu'à soulever le couvercle pour accéder au contenu de ce dernier.

Selon encore une autre caractéristique de l'invention, la pièce de sécurité comporte une came actionnant un interrupteur de sécurité lorsque la pièce de sécurité est en position activée, l'interrupteur de sécurité interrompant le fonctionnement du moteur lorsqu'il n'est pas actionné.

Selon encore une autre caractéristique de l'invention, les moyens de rappel de la pièce de sécurité sont constitués par un ressort agissant sur un bras de rappel de la pièce de sécurité.

Selon une autre caractéristique de l'invention, la pièce de sécurité est montée pivotante.

Selon une autre caractéristique de l'invention, la pièce de sécurité comporte un corps annulaire à partir duquel s'étend une tige de sécurité supportant la tête de commande, un bras supportant le patin de freinage et le bras de rappel de la pièce de sécurité, le corps annulaire étant monté pivotant sur un moyeu cylindrique porté par un châssis.

On comprendra mieux les buts, aspects et avantages de la présente invention d'après la description donnée ci-après d'un mode particulier de réalisation de l'invention présenté à titre d'exemple non limitatif, en se référant aux dessins annexés dans lesquels :
- la figure 1 est une vue générale en perspective d'un robot selon un mode de réalisation particulier de l'invention ;
- la figure 2 est une autre vue en perspective du robot de la figure 1 avec le récipient soulevé du socle et le couvercle en position ouverte ;
- la figure 3 est une vue en perspective du boîier du robot de la figure 1 démuni de sa coquille supérieure pour laisser apparaître le mécanisme interne ;
- la figure 4 est une autre vue en perspective du mécanisme interne avec le récipient et son couvercle en position de fonctionnement ;
- la figure 5 est une vue de détail en coupe du bouton de déverrouillage du couvercle ;
- la figure 6 est une vue en perspective du mécanisme interne du robot de la figue 1 avec la pièce de sécurité illustrée en position de repos correspondant à l'absence de couvercle;
- la figure 7 est une vue similaire à la figure 6 avec la pièce de sécurité illustrée en position activée.

Seuls les éléments nécessaires à la compréhension de l'invention ont été représentés. Pour faciliter la lecture des dessins, les mêmes éléments portent les mêmes références d'une figure à l'autre.

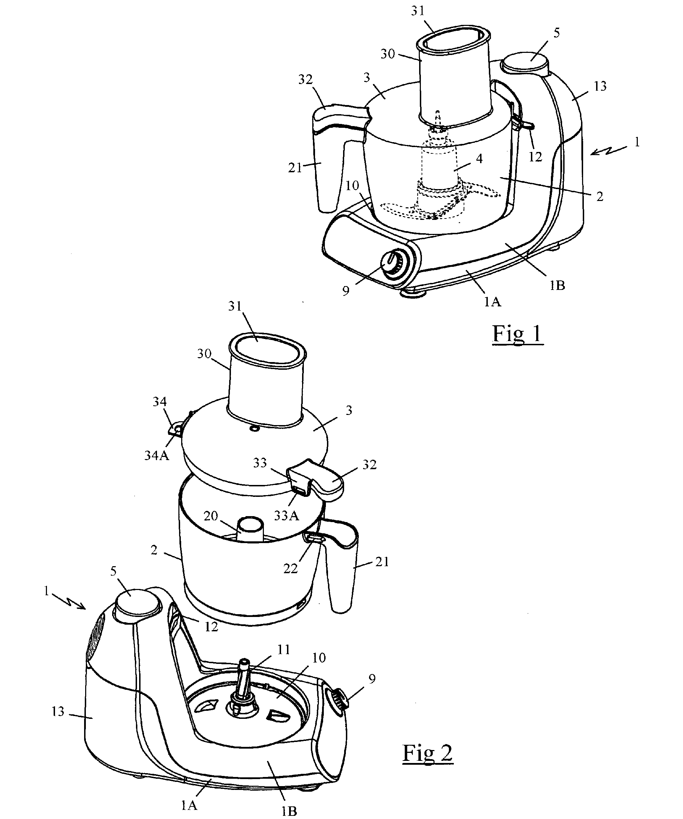

Le robot ménager ou l'appareil électroménager de préparation culinaire illustré aux figures 1 et 2 comprend un boîtier 1 comprenant une coquille inférieure 1A et une coquille supérieure 1 B en matière plastique assemblées l'une sur l'autre par des vis, non représentées sur les figures. La coquille supérieure 1B comporte un socle 10 destiné à recevoir un récipient 2 amovible définissant une enceinte de travail dans laquelle est disposé un outil coupant 4 rotatif, illustré en pointillé sur la figure 1.

Comme on peut le voir sur la figure 2, le récipient 2 comporte classiquement un fond muni d'une cheminée centrale 20 au travers de laquelle vient s'engager un entraîneur rotatif 11 lorsque le récipient 2 est disposé sur le socle 10, le socle 10 comportant des moyens d'immobilisation du récipient 2, non visibles sur les figures, assurant le verrouillage et le positionnement du récipient 2 sur le socle 10 selon une seule orientation, dite position de travail, illustrée sur la figure 1.

Le récipient 2 est fermé par un couvercle 3 amovible comportant une goulotte d'alimentation 30 recevant un poussoir 31, le couvercle 3 comprenant une excroissance latérale 32 venant dans l'alignement d'une poignée 21 de préhension du récipient pour former avec cette dernière un ensemble visuellement monobloc lorsque le couvercle 3 est correctement positionné sur le récipient 2, ainsi que cela est illustré sur la figure 1.

De manière préférentielle, l'excroissance 32 comporte une attache 33 latérale s'étendant vers le bas et comportant un orifice oblong 33A dans lequel vient s'engager un ergot 22 porté par un côté de la poignée 21 lorsque le couvercle 3 est tourné sur le bord supérieur du récipient 2, dans le sens trigonométrique, pour être amené dans une position de fonctionnement dans laquelle l'excroissance 32 se trouve dans l'alignement de la poignée 21.

Le couvercle 3 comporte également une patte 34 de verrouillage disposée sensiblement à l'opposé de l'excroissance 32 et venant s'insérer dans une fente 12 d'un caisson 13 s'élevant verticalement en bordure du socle 10 lorsque le couvercle 3 est en position de fonctionnement sur le récipient 2 et que le récipient 2 est en position de travail sur le socle 10, le sommet du caisson 13 recevant un bouton de déverrouillage 5 du couvercle 3.

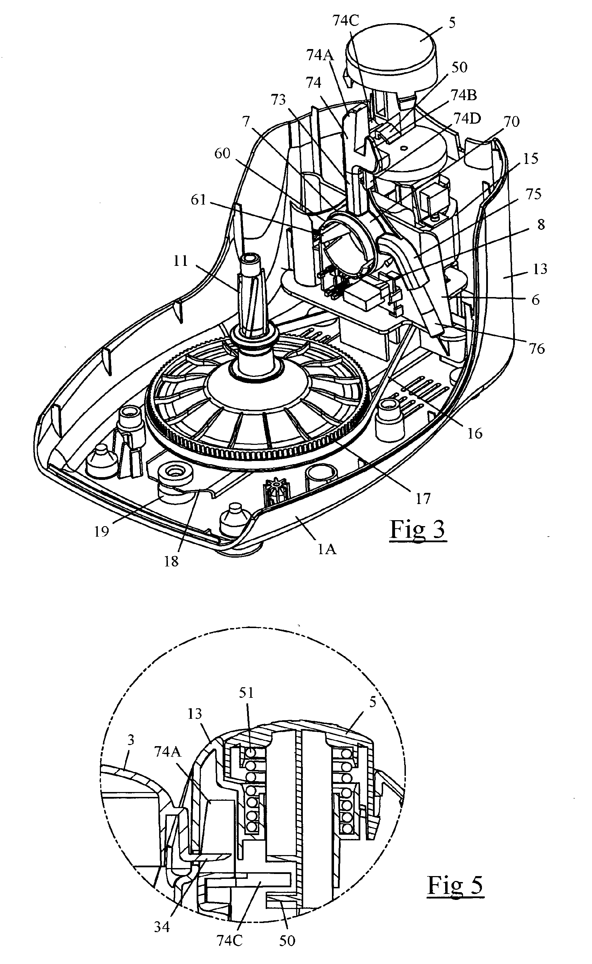

Conformément à la figure 3, le caisson 13 renferme un moteur 15 électrique disposé verticalement et relié par une courroie 16 de transmission à une roue crantée 17 solidaire de l'entraîneur 11 sur lequel vient s'accoupler l'outil coupant 4, le moteur 15 étant avantageusement commandé au moyen d'un bouton de commande 9 rotatif disposé sur la face avant du boîier 1, visible sur les figures 1 et 2, permettant de régler la vitesse de rotation du moteur 15.

De manière avantageuse, le moteur 15 et la roue crantée 17 sont portés par un rail métallique 18 fixé sur la coquille inférieure du boîier au moyen de silentblocs 19, le rail métallique 18 supportant une platine 6 de fixation en matière plastique sur laquelle est fixé le moteur 15.

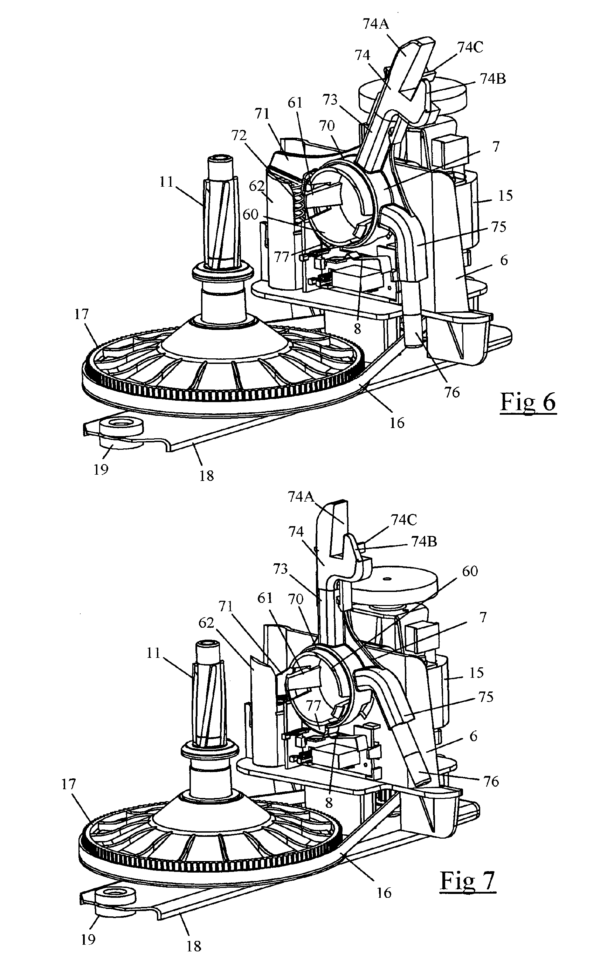

La platine 6 comporte préférentiellement une paroi verticale s'étendant latéralement au moteur 15, la paroi supportant un moyeu cylindrique 60 sur lequel est montée une pièce de sécurité 7 pouvant pivoter dans un plan vertical entre une position de repos, illustrée sur la figure 6, vers laquelle elle est ramenée par des moyens de rappel, et une position activée, illustrée sur la figure 7, vers laquelle elle est amenée lorsque le couvercle 3 est en position de fonctionnement. A cet effet, la pièce de sécurité 7 comporte un corps annulaire 70 tournant librement sur le moyeu cylindrique 60, le corps annulaire 70 étant maintenu axialement par deux languettes élastiques 61.

Les moyens de rappel de la pièce de sécurité sont avantageusement constitués par un bras 71 s'étendant radialement depuis le corps annulaire 70 et prenant appui sur un ressort 72 disposé verticalement dans un logement cylindrique 62 de la platine 6.

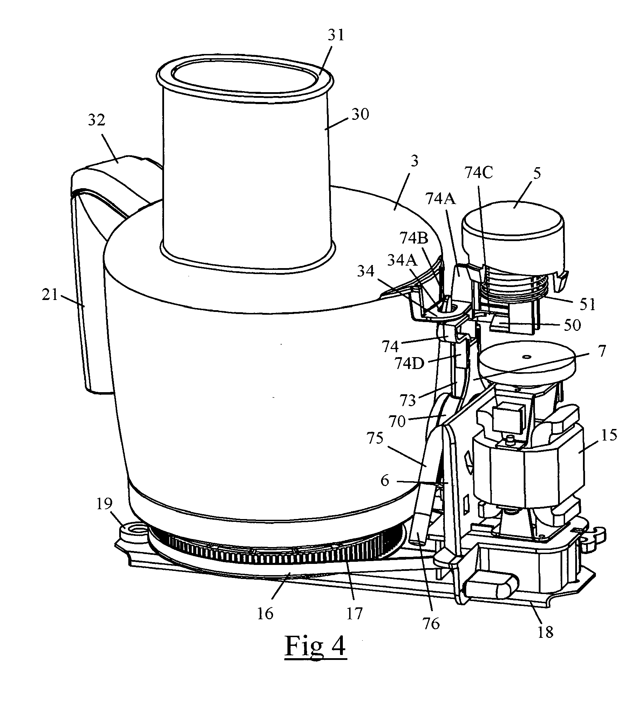

Conformément aux figures 3 et 4, la pièce de sécurité 7 comporte une tige de sécurité 73 venant coopérer avec la patte 34 du couvercle lorsque le couvercle 3 est amené en position de fonctionnement par rotation dans le sens trigonométrique.

A cet effet, la tige de sécurité 73 comprend une tête de commande 74 avantageusement fabriquée dans une pièce en matériau plastique indépendante de la tige de sécurité 73, la tête de commande 74 étant clipsée sur la tige de sécurité 73 au moyen de languettes élastiques 74D. Une telle caractéristique présente l'avantage de réduire l'encombrement de la pièce de sécurité lors de son transport de son lieu de fabrication à son lieu d'assemblage.

La tête de commande présente une forme générale en U et comporte une première branche 74A, sur laquelle vient s'appuyer le bord de la patte 34 lors de la rotation du couvercle 3 pour sa fermeture, et une seconde branche 74B, plus courte, munie d'une extrémité effilée formant un verrou passant sous la patte 34 du couvercle lorsque la pièce de sécurité 7 est en position de repos et venant s'engager dans un orifice 34A de la patte 34 lorsque le couvercle 3 est amené en position de fonctionnement, l'insertion du verrou 74B dans l'orifice 34A permettant de rendre le couvercle 3 solidaire en rotation de la pièce de sécurité 7.

De manière préférentielle, la pièce de sécurité 7 est bloquée en position activée par un dispositif de verrouillage constitué par une troisième branche 74C portée par la tête de commande 74, la troisième branche 74C s'étendant perpendiculairement à la première branche 74A et coopérant avec un doigt de blocage 50 porté par le bouton de déverrouillage 5. A cet effet, le bouton de déverrouillage 5 est ramené par un ressort 51 dans une position de repos, illustrée à la figure 4, dans laquelle une face arrière du doigt de blocage 50 se trouve sur la trajectoire de la troisième branche 74C et forme une butée empêchant le retour en position de repos de la pièce de sécurité 7.

Le bouton de déverrouillage 5 peut être déplacé manuellement, en exerçant une pression verticale sur ce dernier à l'encontre du ressort 51, vers une position d'ouverture du couvercle 3, illustrée sur la figure 5, dans laquelle le doigt de blocage 50 se trouve en dehors de la trajectoire de la troisième branche 74C de sorte que la pièce de sécurité 7 est ramenée automatiquement en position de repos sous l'effet du ressort 72 de rappel.

Le ressort 72 de rappel est avantageusement dimensionné de telle sorte que l'effort exercé par la première branche 74A de la tige de sécurité 73 sur la patte 34 du couvercle 3, lors du retour en position de repos de la pièce de sécurité 7, permette l'éjection automatique de la patte 34 en dehors de la fente 12 du caisson 13.

A cet effet, le ressort 72 de rappel est adapté pour que le couple de rappel généré par la première branche 74A sur le couvercle soit supérieur aux efforts de frottement du couvercle 3 sur le récipient 2. A titre d'exemple, le ressort 72 sera choisi de telle sorte que la rotation automatique du couvercle 3 sur le récipient 2 lors de l'actionnement du bouton de déverrouillage 5 s'effectue sur un angle compris entre 20° et 45°, le choix du ressort 72 pouvant être fait expérimentalement.

Plus particulièrement selon l'invention, et conformément à la figure 6, le corps annulaire 70 de la pièce de sécurité 7 supporte également un bras 75 comportant une extrémité munie d'un patin de freinage 76 venant prendre appui latéralement contre la courroie 16 du mécanisme de transmission lorsque la pièce de sécurité 7 est ramenée en position de repos par le ressort 72, le patin 76 se trouvant éloigné de la courroie 16 lorsque la pièce de sécurité est en position activée, ainsi que cela est illustré sur la figure 7. A titre d'exemple, le patin de freinage 76 est constitué par une tige métallique sur laquelle est surmoulé le bras 75 en matériau plastique.

De manière préférentielle, le corps annulaire 70 de la pièce de sécurité 7 comporte également une came 77 qui vient actionner un interrupteur de sécurité 8 uniquement lorsque la pièce de sécurité 7 est en position activée, l'interrupteur de sécurité 8 étant disposé sur le circuit d'alimentation du moteur 15 de manière à interrompre l'alimentation électrique du moteur 15 lorsque l'interrupteur de sécurité 8 n'est pas actionné, c'est-à-dire lorsque la pièce de sécurité 7 est en position de repos.

L'appareil ainsi réalisé présente l'avantage de comporter une pièce de sécurité 7 multifonctions procurant une grande sécurité d'utilisation et assurant notamment le freinage automatique de l'outil coupant 4 lors de l'ouverture du couvercle 3.

En effet, conformément aux figures 1 et 4, lorsque le couvercle 3 est amené par rotation en position de fonctionnement, l'ergot 22 de la poignée vient s'engager dans l'orifice 33A oblong de l'excroissance 32 du couvercle et, simultanément, la patte 34 de verrouillage pénètre au travers de la fente 12 du caisson et prend appui sur la première branche 74A de la tête de commande, provoquant la rotation de la tige de sécurité 73 de l'ordre de 30° autour du moyeu 60 et la compression du ressort 72 par le bras 71 de rappel.

La pièce de sécurité 7 passe alors de la position de repos, illustrée à la figure 6, dans laquelle la tige de sécurité 73 est inclinée par rapport à la verticale, à une position activée, illustrée aux figures 4 et 7, dans laquelle la tige de sécurité 73 s'étend verticalement de sorte que le verrou 74B est inséré dans l'orifice 34A de la patte 34 du couvercle.

Lors de cette rotation de la tige de sécurité 73, la troisième branche 74C vient au contact d'une rampe inclinée située sur la face avant du doigt de blocage 50, ce qui génère un effort provoquant l'enfoncement du bouton de verrouillage 5 à l'encontre de son ressort 51 de rappel jusqu'à ce que la troisième branche 74C s'échappe derrière le doigt de blocage 50. Le bouton de verrouillage 5 retourne alors en position de repos sous l'effet de son ressort 51 de rappel de sorte que la face arrière du doigt de blocage 50 empêche le retour de la pièce de sécurité 7 en position de repos.

Le couvercle 3 se trouve alors immobilisé verticalement sur le récipient 2, en position fermée de fonctionnement, à la fois par l'insertion de la patte 34 dans la fente 12 du caisson et par l'engagement de l'ergot 22 dans l'orifice oblong 33A de l'excroissance 32 du couvercle 3.

Lors de la rotation de la pièce de sécurité 7 vers la position activée, la came 77 portée par le corps annulaire 70 actionne l'interrupteur de sécurité 8 pour autoriser le fonctionnement du moteur 15 et le patin de freinage 76 se trouve éloigné de la courroie 16. Le moteur 15 de l'appareil peut alors être mis en route en toute sécurité en manoeuvrant le bouton de commande 9.

Si l'utilisateur désire ouvrir le couvercle 3, il lui suffit d'appuyer sur le bouton de déverrouillage 5 de manière à ce que le doigt de blocage 50 s'écarte de la trajectoire de la troisième branche 74C. Lors de cette manoeuvre, la patte 34 du couvercle se trouve éjectée automatiquement de la fente 12 du caisson par la rotation de la tige de sécurité 73 sous l'effet du ressort 72.

Lors de la rotation du couvercle 3 provoquée par le retour en position de repos de la pièce de sécurité 7, l'alimentation électrique du moteur 15 se trouve interrompue du fait de la rotation de la came 77 qui n'actionne plus l'interrupteur de sécurité 8 et le patin de freinage 76 vient frotter contre la courroie 16, ce qui provoque un frottement freinant brutalement l'entraîneur 11 et donc l'outil coupant 4. L'utilisateur accède donc en toute sécurité à l'intérieur du récipient 2 en soulevant le couvercle 3 après avoir appuyé sur le bouton de déverrouillage 5.

L'appareil ainsi réalisé présente l'avantage de posséder un dispositif de sécurité qui est simple et économique à mettre en oeuvre grâce à l'usage d'une seule pièce de sécurité pour assurer plusieurs fonctions de sécurité. De plus, un tel appareil présente l'avantage de procurer une grande ergonomie d'utilisation en assurant une rotation automatique du couvercle et l'éjection de la patte de déverrouillage en dehors de la fente lorsque le bouton de déverrouillage est actionné, de sorte que l'utilisateur n'a plus qu'à soulever le couvercle pour avoir accès à l'intérieur du récipient.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, le patin de freinage pourra être constitué par un élément élastomère venant frotter contre la roue dentée du mécanisme de transmission pour assurer le freinage de l'outil coupant.

Ainsi, dans une autre variante de réalisation, la patte pourra être solidaire d'une couronne de verrouillage montée mobile en rotation sur la périphérie du couvercle.

## Revendications

1. Appareil électroménager de préparation culinaire comportant un récipient (2) renfermant un outil coupant (4) entraîné en rotation par un moteur (15), le récipient (2) étant fermé par un couvercle (3) amovible comportant une patte (34) venant agir sur une pièce de sécurité (7) lorsque la patte (34) du couvercle est tournée vers une position de fonctionnement, ladite pièce de sécurité (7) étant mobile entre une position de repos, vers laquelle elle est ramenée par des moyens de rappel (72), et une position activée, vers laquelle elle est amenée lorsque la patte (34) est en position de fonctionnement, **caractérisé en ce que** ladite pièce de sécurité (7) comporte un patin de freinage (76) venant frotter contre un élément de transmission (16) solidaire en rotation de l'outil coupant (4) lorsque la pièce de sécurité (7) est en position de repos, ledit patin de freinage (76) étant éloigné dudit élément de transmission (16) lorsque la pièce de sécurité (7) est en position activée.

2. Appareil électroménager de préparation culinaire selon la revendication 1, **caractérisé en ce que** le patin de freinage (76) est réalisé en matériau métallique.

3. Appareil électroménager de préparation culinaire selon l'une quelconque des revendications 1 à 2, **caractérisé en ce que** l'élément de transmission (16) est une courroie.

4. Appareil électroménager de préparation culinaire selon l'une quelconque des revendications 1 à 3, **caractérisé en ce que** la patte (34) du couvercle est amenée dans la position de fonctionnement par rotation de la patte (34) coaxialement au récipient (2).

5. Appareil électroménager de préparation culinaire selon la revendication 4, **caractérisé en ce que** ladite patte (34) en position de fonctionnement se trouve insérée dans une fente (12) ménagée dans un caisson (13) adjacent au récipient (2) et coopère avec une tête de commande (74) de la pièce de sécurité (7).

6. Appareil électroménager de préparation culinaire selon la revendication 5, **caractérisé en ce que** la tête de commande (74) comporte un verrou (74B) assurant l'immobilisation de la patte (34) en position de fonctionnement lorsque la pièce de sécurité (7) est en position activée.

7. Appareil électroménager de préparation culinaire selon la revendication 6, **caractérisé en ce que** l'appareil comporte un bouton de déverrouillage (5) ramené par un ressort (51) de rappel dans une position de repos dans laquelle le bouton de déverrouillage (5) immobilise la pièce de sécurité (7) dans la position activée et **en ce que** le bouton de déverrouillage (5) peut être déplacé manuellement vers une position de déverrouillage dans laquelle la pièce de sécurité (7) peut se déplacer librement vers sa position de repos.

8. Appareil électroménager de préparation culinaire selon la revendication 7, **caractérisé en ce que** les moyens de rappel (72) sont dimensionnés de telle sorte que la patte (34) du couvercle retourne automatiquement vers une position d'ouverture du couvercle (3), dans laquelle la patte (34) se trouve en dehors de la fente (12) du caisson (13), lorsque le bouton de déverrouillage (5) est actionné.

9. Appareil électroménager de préparation culinaire selon l'une quelconque des revendications 1 à 8, **caractérisé en ce que** ladite pièce de sécurité (7) comporte une came (77) actionnant un interrupteur de sécurité (8) lorsque la pièce de sécurité (7) est en position activée et **en ce que** ledit interrupteur de sécurité (8) interrompt le fonctionnement du moteur (15) lorsqu'il n'est pas actionné.

10. Appareil électroménager de préparation culinaire selon l'une quelconque des revendications 1 à 9, **caractérisé en ce que** les moyens de rappel de la pièce de sécurité (7) sont constitués par un ressort (72) agissant sur un bras (71) de rappel de la pièce de sécurité (7).

11. Appareil électroménager de préparation culinaire selon l'une quelconque des revendications 1 à 10, **caractérisé en ce que** ladite pièce de sécurité (7) est montée pivotante.

## Patentansprüche

1. Elektrohaushaltsgerät zur Zubereitung von Nahrungsmitteln mit einem Gefäß (2), das ein Schneidwerkzeug (4) umschließt, das von einem Motor (15) in Drehung versetzt wird, wobei das Gefäß (2) durch einen abnehmbaren Deckel (3) verschlossen wird, der mit einer Lasche (34) versehen ist, die auf ein Sicherheitselement (7) wirkt, wenn die Lasche (34) des Deckels in eine Betriebsstellung gedreht wird, wobei das genannte Sicherheitselement (7) zwischen einer Ruhestellung, in die es durch Rückstellmittel (72) zurückgebracht wird, und einer aktivierten Stellung beweglich ist, in die es gebracht wird, wenn sich die Lasche (34) in der Betriebsstellung befindet, **dadurch gekennzeichnet, dass** das genannte Sicherheitselement (7) einen Bremsschuh (76) umfasst, der an einem drehfest mit dem Schneidwerkzeug (4) verbundenen Übertragungselement (16) schleift, wenn sich das Sicherheitselement (7) in der Ruhestellung befindet, wobei der genannte Bremsschuh (76) von dem genannten Übertragungselement (16) abgehoben wird, wenn sich das Sicherheitselement (7) in der aktivierten Stellung befindet.

2. Elektrohaushaltsgerät zur Zubereitung von Nahrungsmitteln nach Anspruch 1, **dadurch gekennzeichnet, dass** der Bremsschuh (76) aus Metall besteht.

3. Elektrohaushaltsgerät zur Zubereitung von Nahrungsmitteln nach einem der Ansprüche 1 bis 2, **dadurch gekennzeichnet, dass** das Übertragungselement (16) ein Riemen ist.

4. Elektrohaushaltsgerät zur Zubereitung von Nahrungsmitteln nach einem der Ansprüche 1 bis 3, **dadurch gekennzeichnet, dass** die Lasche (34) des Deckels durch Drehung der Lasche (34) koaxial zum Gefäß (2) in die Betriebsstellung gebracht wird.

5. Elektrohaushaltsgerät zur Zubereitung von Nahrungsmitteln nach Anspruch 4, **dadurch gekennzeichnet, dass** die genannte Lasche (34) in der Betriebsstellung in eine Nut (12) eingreift, die in einem an das Gefäß (2) angrenzenden Gehäuse (13) ausgebildet ist, und mit einem Steuerkopf (74) des Sicherheitselements (7) zusammenwirkt.

6. Elektrohaushaltsgerät zur Zubereitung von Nahrungsmitteln nach Anspruch 5, **dadurch gekennzeichnet, dass** der Steuerkopf (74) eine Verriegelung (74B) umfasst, die die Arretierung der Lasche (34) in der Betriebsstellung sicherstellt, wenn sich das Sicherheitselement (7) in der aktivierten Stellung befindet.

7. Elektrohaushaltsgerät zur Zubereitung von Nahrungsmitteln nach Anspruch 6, **dadurch gekennzeichnet, dass** das Gerät einen Entriegelungsknopf (5) umfasst, der durch eine Rückstellfeder (51) in eine Ruhestellung zurückgebracht wird, in der der Entriegelungsknopf (5) das Sicherheitselement (7) in der aktivierten Stellung arretiert, und dass der Entriegelungsknopf (5) manuell in eine Entriegelungsstellung gebracht werden kann, in der sich das Sicherheitselement (7) frei in seine Ruhestellung bewegen kann.

8. Elektrohaushaltsgerät zur Zubereitung von Nahrungsmitteln nach Anspruch 7, **dadurch gekennzeichnet, dass** die Rückstellmittel (72) so ausgelegt sind, dass die Lasche (34) des Deckels automatisch in eine Öffnungsstellung des Deckels (3) zurückkehrt, in der sich die Lasche (34) außerhalb der Nut (12) des Gehäuses (13) befindet, wenn der Entriegelungsknopf (5) betätigt wird.

9. Elektrohaushaltsgerät zur Zubereitung von Nahrungsmitteln nach einem der Ansprüche 1 bis 8, **dadurch gekennzeichnet, dass** das genannte Sicherheitselement (7) eine Nocke (77) umfasst, die einen Sicherheitsschalter (8) betätigt, wenn sich das Sicherheitselement (7) in der aktivierten Stellung befindet, und dass der genannte Sicherheitsschalter (8) den Betrieb des Motors (15) unterbricht, wenn er nicht betätigt wird.

10. Elektrohaushaltsgerät zur Zubereitung von Nahrungsmitteln nach einem der Ansprüche 1 bis 9, **dadurch gekennzeichnet, dass** die Rückstellmittel des Sicherheitselements (7) aus einer Feder (72) bestehen, die auf einen Rückstellarm (71) des Sicherheitselements (7) wirkt.

11. Elektrohaushaltsgerät zur Zubereitung von Nahrungsmitteln nach einem der Ansprüche 1 bis 10, **dadurch gekennzeichnet, dass** das genannte Sicherheitselement (7) schwenkbar montiert ist.

## Claims

1. Food preparation household electrical appliance comprising a container (2) containing a cutting tool (4) driven in rotation by a motor (15), the container (2) being closed by a removable lid (3) comprising a lug (34) acting on a safety part (7) when the lug (34) of the lid is turned to an operating position, said safety part (7) being movable between a rest position, to which it is returned by return means (72), and an activated position, to which it is brought when the lug (34) is in operating position, **characterised in that** said safety part (7) comprises a braking shoe (76) which rubs against a transmission element (16) locked in rotation with the cutting tool (4) when the safety part (7) is in rest position, said braking shoe (76) not rubbing against said transmission element (16) when the safety part (7) is in activated position.

2. Food preparation household electrical appliance according to claim 1, **characterised in that** the braking shoe (76) is made of metallic material.

3. Food preparation household electrical appliance according to claim 1 or 2, **characterised in that** the transmission element (16) is a belt.

4. Electrical household food preparation appliance according to any of claims 1 to 3, **characterised in that** the lug (34) of the lid is brought into the operating position by rotation of the lug (34) coaxially to the container (2).

5. Electrical household food preparation appliance according to claim 4, **characterised in that** said lug (34) in operating position is inserted into a slot (12) formed in a housing (13) adjacent to the container (2) and cooperates with a control head (74) of the safety part (7).

6. Electrical household food preparation appliance according to claim 5, **characterised in that** the control head (74) comprises a latch (74B) immobilising the lug (34) in operating position when the safety part (7) is in activated position.

7. Electrical household food preparation appliance according to claim 6, **characterised in that** the appliance comprises a release button (5) returned by a return spring (51) to a rest position in which the release button (5) immobilises the safety part (7) in the activated position and **in that** the release button (5) can be moved manually to an unlocking position in which the safety part (7) is free to move towards its rest position.

8. Electrical household food preparation appliance according to claim 7, **characterised in that** the return means (72) are dimensioned such that the lug (34) of the lid automatically returns to a position for opening the lid (3), in which the lug (34) is located outside the slot (12) of the housing (13), when the release button (5) is actuated.

9. Electrical household food preparation appliance according to any of claims 1 to 8, **characterised in that** said safety part (7) comprises a cam (77) actuating a safety switch (8) when the safety part (7) is in activated position and **in that** said safety switch (8) switches off the motor (15) when it is not actuated.

10. Food preparation household electrical appliance according to any of claims 1 to 9, **characterised in that** the return means of the safety part (7) consist of a spring (72) acting on an arm (71) for returning the safety part (7).

11. Electrical household food preparation appliance according to any of claims 1 to 10, **characterised in that** said safety part (7) is pivotally mounted.
